# EUROPEAN PATENT SPECIFICATION

(11) **EP 4 331 922 B1**
(45) Date of publication and mention of the grant of the patent: **02.04.2025**
(21) Application number: 23192266.7
(22) Date of filing: 18.08.2023
(51) Int. Cl.: B60R 21/213, B60R 21/217

(54) **MOUNTING BRACKET FOR AN AIRBAG**
BEFESTIGUNGSVORRICHTUNG FÜR EINEN AIRBAG
SUPPORT DE MONTAGE POUR UN COUSSIN GONFLABLE

(30) Priority: 31.08.2022 EP 22382811; 04.01.2023 EP 23382004; 14.04.2023 EP 23168122
(43) Date of publication of application: 06.03.2024
(73) Proprietor: Illinois Tool Works Inc., Glenview IL 60025 (US)
(72) Inventor: DIEZ, Victor, Glenview 60025 (US); MARINO, Ivan Martin, Glenview 60025 (US)
(74) Representative: HGF

(56) References cited:
- JP-A- 2009 154 670
- US-A1- 2011 248 483
- US-A1- 2020 384 938

## Description

### Technical Field of Invention

The invention relates to a mounting bracket. In particular, the invention relates to a mounting bracket for mounting an airbag to a component of a vehicle, and even more particular, for mounting side curtain airbags of a vehicle.

### Background

Side curtain airbags have been added as an additional measure of passenger safety in automobiles. A side curtain airbag assembly is typically retained behind the interior trim of the headliner, just above the side window of the vehicle. During a crash event, the airbag is then deployed between the vehicle occupant and the window or other side structures of the vehicle.

Currently, fasteners and mounts for side curtain airbags have to be preassembled with a mounting bracket (i.e. pre-closed clamps or ties) before the assembly can be installed at the vehicle. This assembly steps required for installing the airbag assembly can be time consuming and complex, including positioning the airbag in the proper location, separately acquiring and securing a bolt or screw. Also, available inflator bracket include sharp edges and/or small contact surfaces where the clamps are positioned, thus, providing a high risk of damaging the inflator of the airbag potentially causing leaks. Document US 2011/248483 A1 discloses a mounting bracket according to the preamble of claim 1. Further mounting brackets are known from documents JP2009154670 A and US 2020/384938 A1.

Further, the fasteners or mounts used for holding a side curtain airbag in place must be strong enough to retain the airbag assembly in place even during aggressive, rapid deployment of the air bag during a vehicle crash event, as well as, functionally suitable for easy handling and assembly so as to simplify the alignment of the components. For example, it is necessary to retain a side curtain airbag assembly in a fixed position without rattling during vehicle operation, wherein the components of the mount must ensure a tight fit and provide sufficient sealing of the airbag cushion when attached to the inflator. Desirably, the mount can be assembled quickly and easily in a simple operation at the vehicle, rather than having to mount a preassembled side airbag curtain system.

Issues such as those noted above and others have been present in the assembly and installation structures and processes for installing mounting assemblies used to attach side curtain airbags in automobiles. Accordingly, improvements in fastener assembly structures, installation processes and installation verification procedures are desirable and advantageous.

### Summary of the Invention

The invention is defined by the independent claim 1.

Dependent claims describe optional features.

There is provided a mounting bracket for mounting an airbag to a component of a vehicle, the airbag having an inflator and a cushion received over an end of the inflator, the mounting bracket comprising:
a first clamping element;
a second clamping element;
an elongate member coupled between the first clamping element and the second clamping element; and
one or more mounting portions for mounting the mounting bracket to the component, wherein the one or more mounting portions are disposed on at least one of the first clamping element, the second clamping element or the elongate member,
wherein the first clamping element and the second clamping element are spaced apart along a length of the elongate member such that, in use, the first clamping element and the second clamping element are arranged to clamp the inflator.

Each of the first clamping element and the second clamping element comprise an open-ended sleeve member having a first end portion and a second end portion circumferentially spaced apart from the first end portion.

This provides the advantage of bracket that allows for assembly at the vehicle installation, e.g., the inflator and IC cushion can be correctly mounted within the bracket when installing the bracket with the vehicle, wherein the bracket provides for easily accessible and recognisable predetermined locations of the components minimising the risk of incorrect alignment. The open-ended sleeve members allow for a secure fit without the risk of misalignment while installing the side curtain airbag with the vehicle onsite.

The first end portion comprises a first protrusion facing the second end portion and the second end portion comprises a second protrusion facing the first end portion and which is offset from the first protrusion.

Preferably, the first protrusion and the second protrusion are curved protrusions such that the clamp applies an even circumferential pressure during use. Even more preferably, the first end portion further comprises a third protrusion spaced apart from the first protrusion and facing the second end portion, and wherein the second protrusion is received in a gap between the first protrusion and the third protrusion, in use.

Advantageously, each mounting portion comprises a first mounting flange extending from first end portion and a second mounting flange extending from the second end portion of each of the clamping elements, and wherein the first and second mounting flanges each comprise an aperture configured to receive a fastening element therethrough.

Advantageously, the second end portion is moveable towards the first end portion to a fastened position so as to reduce the circumference of the open-ended sleeve member, and wherein the second end portion is configured to be secured relative to the first end portion in the fastened position.

Advantageously, the first clamping element, the second clamping element, and the elongate member are integrally formed.

Advantageously, when the mounting bracket is in use, the first clamping element is arranged to clamp the cushion and the inflator.

Advantageously, the first clamping element and/or the second clamping element comprises a first arcuate clamping portion and a second arcuate clamping portion pivotally connected to the first arcuate portion, and wherein the second arcuate clamping element is pivotable between an open position and a closed position. Preferably, at least one edge of the first arcuate clamping portion or the second arcuate clamping portion is provided with a tongue, and at least one adjacent edge of the other of the first arcuate clamping portion or the second arcuate clamping portion is provided with a groove configured to receive the tongue when the second arcuate clamping element is in the closed position. Even more preferably, the tongue is an arcuate tongue having the same curvature as the first arcuate clamping portion and/or the second arcuate clamping portion.

Advantageously, a first end of each of the first clamping element and the second clamping element comprises a mounting flange for receiving an end portion of the elongate member therethrough. Preferably, the mounting flange is bent and comprises a first portion extending away from the clamping element and a second portion extending back towards the clamping element, and wherein there is a gap between the first portion and the second portion for receiving the end portion of the elongate member therethrough.

Advantageously, the mounting flange has at least one aperture and the end portion of the elongate member has an aperture, and each clamping element is mountable to the end portion of the elongate member by a fastener extending through the aperture of the mounting element and the aperture of the elongate member.

Advantageously, a second end of each of the first clamping element and the second clamping element comprises a securing flange having at least one aperture for receiving a fastener and positioned to align with at least one aperture in the mounting flange for receiving a fastener to secure the securing flange to the mounting flange Advantageously, outer edges of an inner surface of the first clamping element and/or the second clamping element are chamfered and are widened radially outwards.

Advantageously, wherein the first clamping element and/or the second clamping element is arranged to contact the inflator about the entire circumference of the inflator to provide a continuous radial clamping force to the inflator.

### Brief Description of Drawings

Example embodiment(s) of the invention are illustrated in the accompanying drawings, in which:

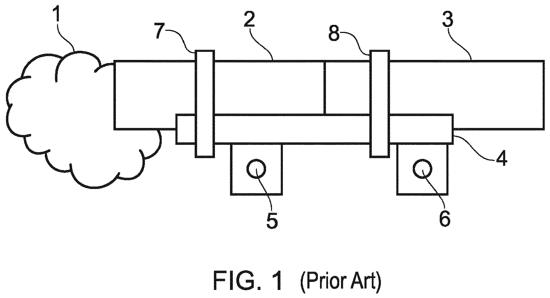

**Figure 1** illustrates a prior art example of a mounting bracket;
**Figure 2** illustrates a front perspective view of a mounting bracket according to a first embodiment of the present invention;
**Figure 3** illustrates a front view of the mounting bracket shown in Figure 1;
**Figure 4** illustrates a side view of the mounting bracket shown in Figure 1;
**Figure 5** illustrates a rear perspective view of the mounting bracket shown in Figure 1;
**Figure 6** illustrates a cross-sectional view **(a)** along the line A-A in Figure 3 and **(b)** along the line B-B in Figure 3;
**Figure 7** illustrates a perspective view of a mounting bracket in a closed position according to an aspect which is not part of the present invention;
**Figure 8** illustrates a perspective view of the mounting bracket shown in Figure 7 in an open position;
**Figure 9** illustrates a schematic side view of the mounting bracket shown in Figure 7;
**Figure 10** illustrates a perspective partial view of a connection between two portions of clamping elements of the mounting bracket shown in Figure 7;
**Figure 11** illustrates a cut-away top view of the connection between two portions of the clamping elements of the mounting bracket shown in Figure 7;
**Figure 12** illustrates a perspective view of a mounting bracket in a closed position according to an aspect which is not part of the present invention;
**Figure 13** illustrates a perspective view of the mounting bracket shown in Figure 12 in an open position;
**Figure 14** illustrates a schematic side view of the mounting bracket shown in Figure 12;
**Figure 15** illustrates a perspective partial view (close-up) of a connection between two portions of clamping elements of the mounting bracket shown in Figure 12 at a first end of the clamping elements;
**Figure 16** illustrates a perspective ;view (close-up) of a connection between two portions of clamping elements of the mounting bracket shown in Figure 12 at a second end of the clamping elements;
**Figure 17** illustrates a front view of a first portion of a clamping element of the mounting bracket shown in Figure 12 including round or chamfered edges (arrow);
**Figure 18** illustrates a rear view of a second portion of a clamping element of the mounting bracket shown in Figure 12 including round or chamfered edges (arrow);
**Figures 19 (a) to (e)** illustrate an assembly sequence of the mounting bracket shown in Figure 12;
**Figure 20** illustrates a perspective view of a mounting bracket in a closed position according to an aspect which is not part of the present invention;
**Figure 21** illustrates a perspective view of the mounting bracket shown in Figure 20 in an open position;
**Figure 22** illustrates a schematic side view (incl. arrows illustrating the radial clamp forces) of the mounting bracket shown in Figure 20;
**Figure 23** illustrates a perspective close-up view of the connection between the clamping element and the elongate member of the mounting bracket shown in Figure 20;
**Figure 24** illustrates a perspective close-up view of a stepless fixing of the clamp (toothed fixing) of the mounting bracket in Figure 20;
**Figure 25** illustrates a cut-away front view of a clamping element of the mounting bracket shown in Figure 20 including round or chamfered edges (arrow), and
**Figure 26** illustrates a different perspective view of the mounting bracket shown in Figure 20 with clamps in a closed position.

### Description

The described example embodiments relate to mounting assemblies suitable for securing airbags and in particular side curtain airbags. The embodiments of the invention are normally applied in vehicles. Although the invention is described with respect to vehicles, the invention is not restricted to vehicles altogether, but may also be used in other structures requiring attachment of accessories or peripheral components to a structure.

Certain terminology is used in the following description for convenience only and is not limiting. The words 'right', 'left', 'lower', 'upper', 'front', 'rear', 'upward', 'down', 'downward', 'above' and 'below' designate directions in the drawings to which reference is made and are with respect to the described component when assembled and mounted (e.g. *in situ*). The words 'inner', 'inwardly' and 'outer', 'outwardly' refer to directions toward and away from, respectively, a designated centerline or a geometric center of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner.

Through the description and claims of this specification, the terms 'comprise' and 'contain', and variations thereof, are interpreted to mean 'including but not limited to', and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality, as well as, singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract or drawings), or to any novel one, or any novel combination, of the steps of any method or process so disclosed.

The following illustrated example embodiment(s) relate(s) to a mounting bracket for mounting an airbag (side curtain airbag) to a component of a vehicle.

The drawings illustrate a new design of a mounting bracket which applies an even circumferential pressure to a cushion sleeve and an inflator of an airbag to prevent gas leakage from the cushion between the sleeve and the inflator. The airbag may be a curtain airbag.

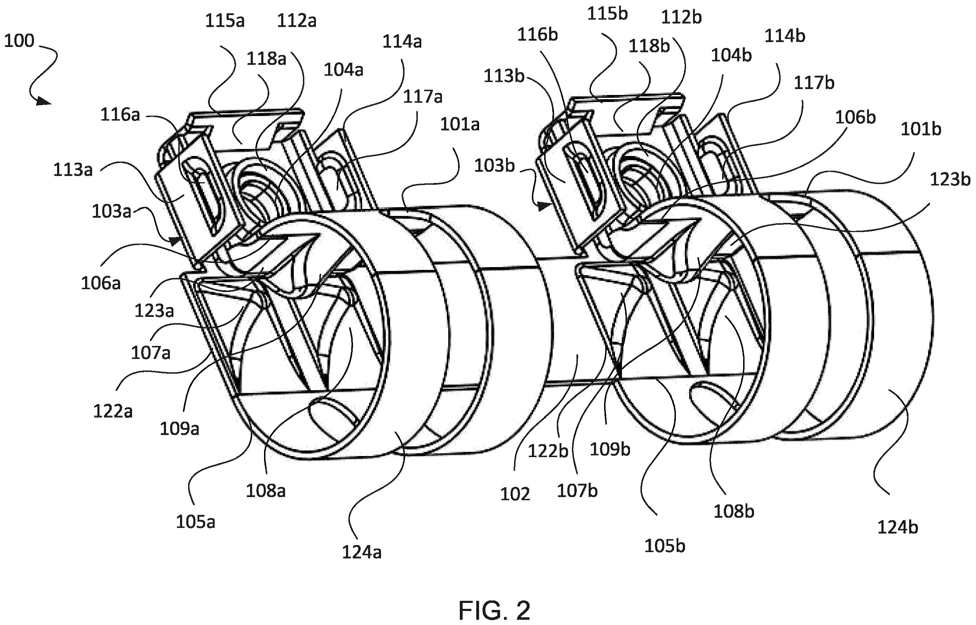

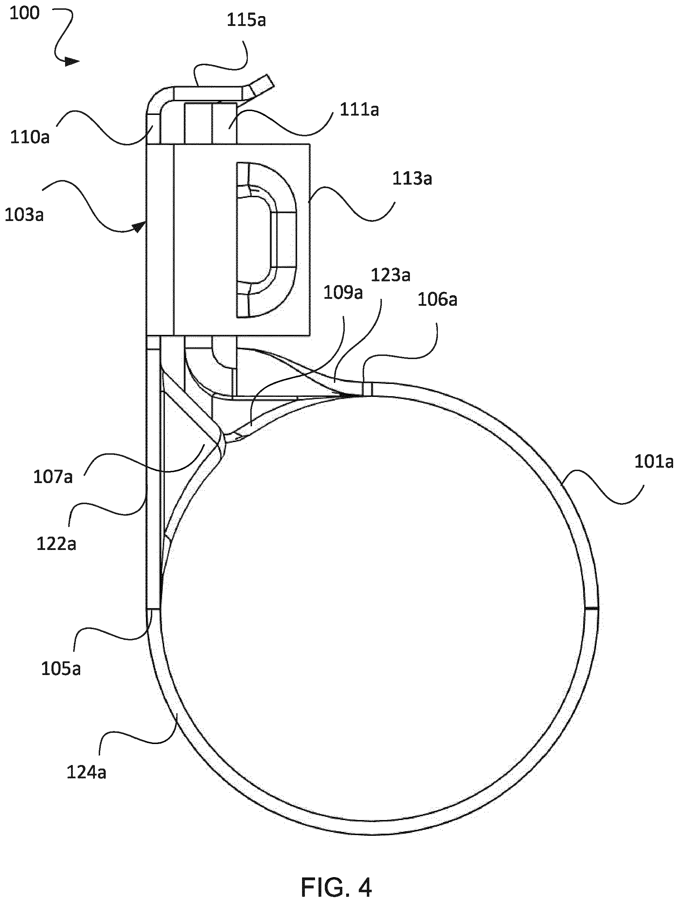

Referring now to Figures 2 to 6, a mounting bracket 100 according to a first aspect of the present invention is shown. The mounting bracket 100 has a first clamping element 101a, a second clamping element 101b and an elongate member 102 extending between the first clamping element 101a and the second clamping element 101b. The elongate member 102 may be planar or curved so as to conform with a portion of the surface of an airbag inflator. Each one of a first mounting member 103a and a second mounting member 103b extend from the first and second clamping elements 101a, 101b, respectively. Each of the first and second mounting members 103a, 103b having a mounting aperture 104a, 104b for receiving a fastener, such as a screw or a clip, to mount the mounting bracket 100 to a component of a vehicle (not shown).

Each clamping element 101a, 101b includes an open-ended sleeve member 124a, 124b having a first end portion 105a, 105b and a second end portion 106a, 106b. The second end portion 106a, 106b is circumferentially spaced apart from and configured to intermeshingly engage with the first end portion 105a, 105b.

Each one of the first and second clamping elements 101a, 101b further includes a first adjustable portion 122a, 122b extending tangentially from the first end portion 105a, 105b and a second adjustable portion 123a, 123b extending tangentially from the second end portion 106a, 106b. The first adjustable portion 122a, 122b has a first and second curved protrusion 107a, 107b, 108a, 108b, axially spaced apart from one another (i.e. in a direction along a central axis of the first and second clamping elements 101a,b when *in situ,* coupled with the elongate member 102). The first and second curved protrusions 107a, 107b, 108a, 108b are curved so as to conform with the cylindrical shape of the sleeve member 124a, 124b during use. The second adjustable portion 123a, 123b has a third curved protrusion 109a, 109b which is positioned between the axially spaced apart first and second curved protrusions 107a, 107b, 108a, 108b, during use. The third protrusion 109a, 109b is also curved so as to conform with the cylindrical shape defined by the closing sleeve member 124a, 124b. During use, when the second end portion 106a, 106b is moved towards the first end portion 105a, 105b, the third curved protrusion 109a, 109b is meshingly received within the space between the first and second curved protrusions 107a, 107b, 108a, 108b such that the third curved protrusion 109a, 109b circumferentially overlaps with the first and second curved protrusions 107a, 107b, 108a, 108b so as to form a continuous inner surface of the closing sleeve members 124a and 124b. The slidingly intermeshing arrangement of the first and second protrusion with the third protrusion allows for an even pressure about the circumference of the inflator and the airbag sleeve received within the clamping elements 101a, 101b, thus, providing an improved clamping force on the inflator and prevents gas leakages.

In some examples, one curved protrusion may be provided with the first adjustable portion 122a, 122b and two curved protrusions may be provided with the second adjustable portion 123a, 123b. In other examples, only one protrusion may be provided on each of the first adjustable portion 122a, 122b and the second adjustable portion 123a, 123b, the protrusions offset from one another. In further examples, two or three protrusions may be provided on one or both of the first and second adjustable portions 122a, 122b, 123a, 123b. Further, the protrusions provided on either one of the first and second adjustable portion 123a,b, are shaped so as to form an inner surface with the open ended sleeve members 124a,b defining a full circle, during use.

Each one of the first and second mounting members 103a,b, comprises a first mounting flange 110a, 110b extending from the first adjustable portion 122a, 122b and a second mounting flange 111a, 111b extending from the second adjustable portion 123a, 123b. The first and second mounting flanges 110a,b, 111a,b have respective apertures 104a,b, 112a,b concentrically aligned with one another, during use. Each aperture 104a,b, 112a,b of the first and second mounting flanges 110a,b, 111a,b has a raised lip forming a cylindrical protrusion. The diameters of the cylindrical protrusions of respective apertures 104a,b and 112a,b are such that the raised lip of the aperture 104a, 104b of the first mounting flange 110a, 110b is matingly received within the raised lip of the aperture 112a, 112b of the second mounting flange 111a, 111b. The apertures 104a, 104b, 112a, 112b are sized to receive a screw, clip, or other fastening element.

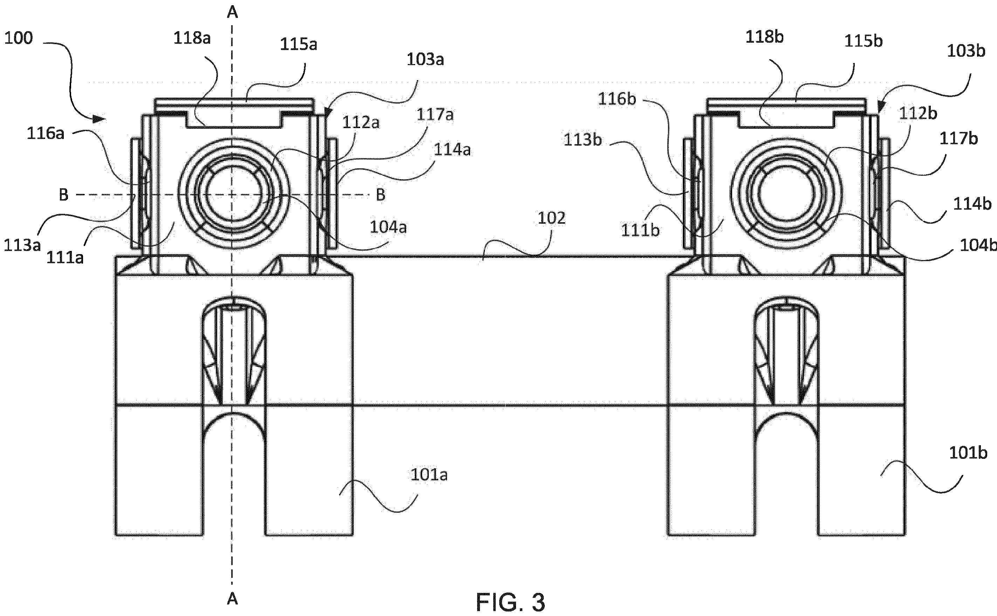

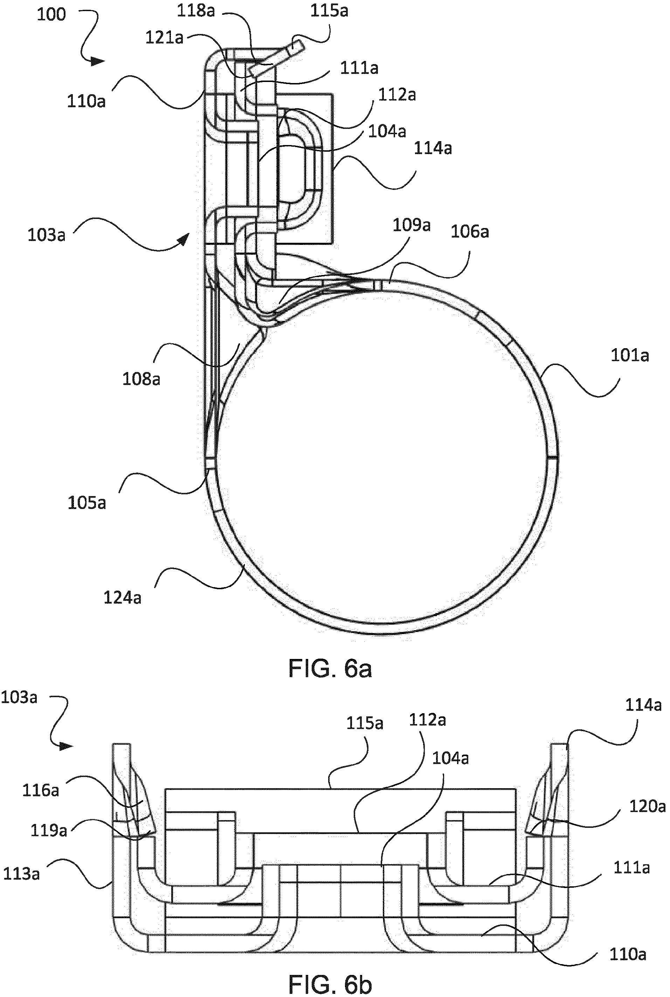

As shown in Figures 2 and 3, the first mounting flange 110a, 110b has three locking flanges 113a, 113b, 114a, 114b, 115a, 115b (first to third), which extend from the edges of the first mounting flange 110a, 110b (i.e. in a direction parallel to a central axis of the interlocking apertures 104a,b and 112a,b). Each one of the three locking flanges 113a, 113b, 114a, 114b, 115a, 115b is made from a resilient material. As shown in Figures 6(a) and 6(b), each locking flange 113a,b, 114a,b, 115a,b comprises an inwardly projecting tine or surface 116a,b, 117a,b, 118a,b (first to third) extending inwardly downward towards the second mounting flange 111a,b, in use. A first and second contact surface 119a,b, 120a,b (i.e. the bottom surface) of each inwardly projecting tine or surface 116a,b, 117a,b, 118a,b is facing the second mounting flange 111a,b so as to prevent the second mounting flange 111a,b from moving out of engagement with the first mounting flange 110a,b. The locking flanges 113a,b, 114a,b, 115a,b thus lock the first mounting flange 110a,b in a preassembled position with respect to the second mounting flange 111a, 111b.

When closing the clamps 101a, 101b, the locking flanges 113a,b, 114a,b, 115a,b resiliently flex outwards, away from the aperture 104a,b so as to allow the second mounting flange 111a,b to be pushed past the inwardly projecting tines or surfaces 116a,b, 117a,b, 118a,b into the pre-assembled position. A screw, clip or any other suitable fastening means can then be inserted through the concentrically aligned apertures 104a,b, 112a,b to secure the mounting flange 100 to a component of a vehicle. In order to open the clamps 101a, 101b, the locking flanges 113a,b, 114a,b, 115a,b are simply deflected outwards, e.g. by the user, to allow the second mounting flange 111a,b to be moved away from the locking flanges 113a,b, 114a,b, 115a,b.

To secure the mounting bracket 100 to the component, a screw is inserted through the apertures 104a,b, 112a,b. The screw is then tightened to secure the first mounting flange 110a,b against the second mounting flange 111a,b. The tightening of the screws reduces the distance between the first and second end portions 105a,b and 106a,b and increases the intermeshing overlap of the curved protrusions 107a,b, 108a,b, 109a,b, thereby increasing the circumferential pressure applied to the inflator received within the clamps 101a, 101b.

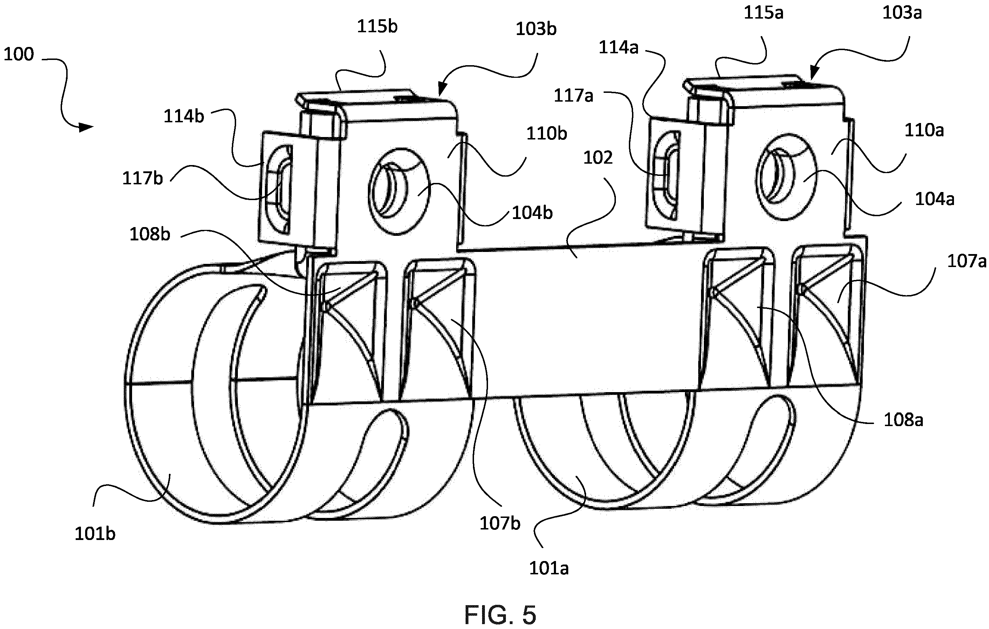

The mounting bracket 100 is integrally formed. The mounting bracket 100 is formed from a sheet metal. The mounting bracket may be formed by stamping the sheet metal. As shown in Figure 5, the first and second protrusions 107a,b, 108a,b and the third protrusions (not shown) are embossed portions of the sheet metal. The lips of the apertures 104a,b, 112a,b (forming respective cylindrical protrusions) are also formed by embossing. The inwardly projecting tines or surfaces 116a,b, 117a,b, 118a,b of the locking flanges 113a,b, 114a,b, 115a,b may be formed by embossing a portion of the locking flanges 113a,b, 114a,b and 115a,b, or may be formed by cutting and bending the sheet metal forming the locking flanges 113a,b, 114a,b and 115a,b, or a combination thereof, as shown in Figures 6(a) and 6(b).

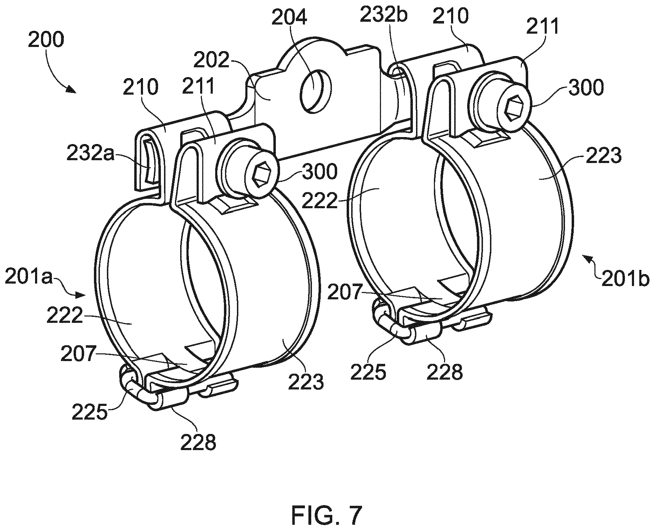

An example embodiment of a mounting bracket 200 according to a second aspect which is not part of the present invention is shown in Figures 7 to 11. The mounting bracket 200 has a first clamping element 201a, a second clamping element 201b and an elongate member 202. The elongate member 202 may be planar or curved so as to conform with a portion of the surface of an airbag inflator. The elongate member 202 has a central mounting aperture 204 for receiving a fastener, such as a screw or a clip, to mount the mounting bracket 200 to a component of a vehicle (not shown). In alternative examples, the mounting bracket may have two or more mounting apertures. The mounting apertures may be disposed in at a central portion of the mounting bracket between the clamping elements, or may be disposed at end portions of the mounting bracket that extend beyond the clamping elements. The mounting bracket may have other means adapted to mount or affix the mounting bracket to a vehicle component.

As shown in Figures 7 to 9, the first and second clamping elements 201a and 201b of the example embodiment are identical and are mounted over opposing first and second end portions 232a and 232b of the elongate member 202. The first and second end portions 232a, 232b each have an aperture for securing the clamping elements 201a, 201b thereto. A mounting flange 210 is extending from a first clamping portion 222 of respective first and second clamping element 201a,b for mounting the first and second clamping elements 201a,b to the elongate member 202, and optionally to a vehicle component (not shown). The mounting flanges 210 are bent over so that a first portion 210a of the mounting flange 210 extends substantially radially away from the clamping element 201a or 201b to then fold over into a second portion 210b of the mounting flange 210 forming a generally U-shaped side-profile. A gap between the first and second portions 210a, 210b is configured to receive respective end portions 232a or 232b of the elongate member 202 therethrough.

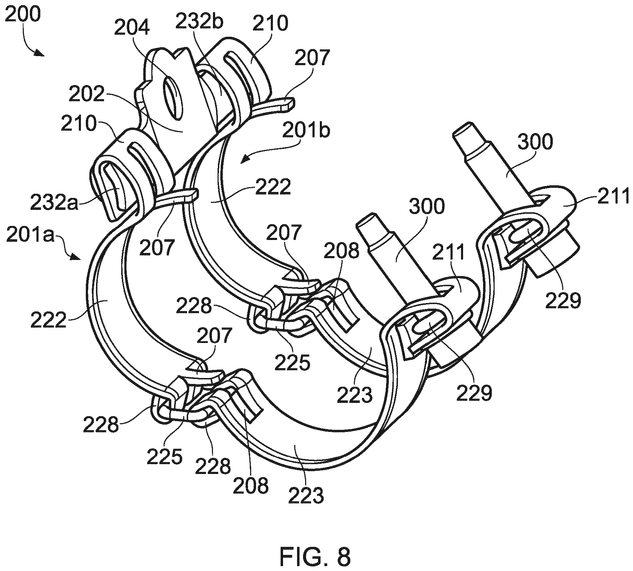

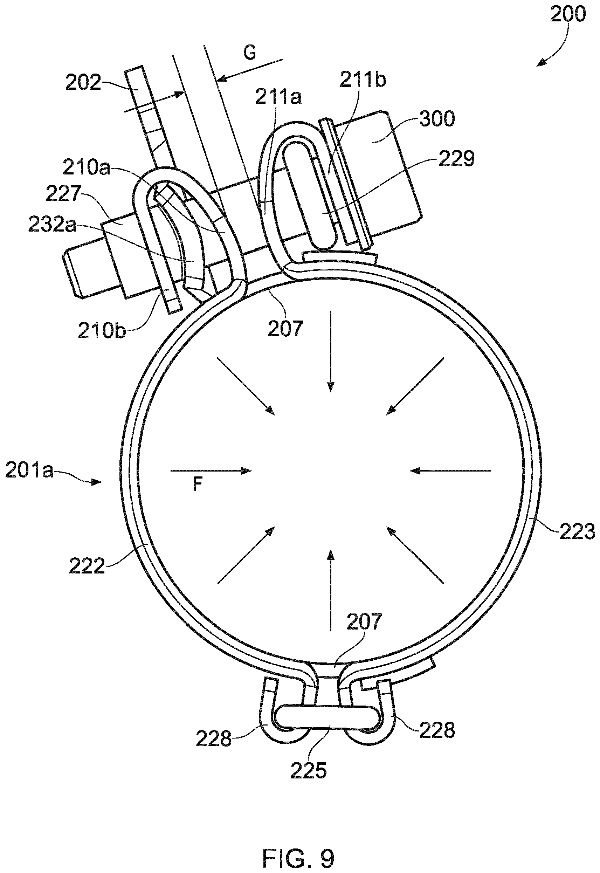

A second clamping portion 223 comprises a securing flange 211 substantially mirroring the first clamping portion and mounting flange 210. The first and second clamping portions 222, 223 are of arcuate shape, so as to form a circular shape or cylinder when assembled first clamping portion 222 and second clamping portion 223 are in a closed position, as shown in Figures 7 and 9. The mounting flange 210 extends from a first end of the first clamping portion 222, and the substantially mirroring securing flange 211 extends from a first end of the second clamping portion 223 having the same U-shaped (or backwards-folded) bent arrangement as the mounting flange 210. Further, the first and second clamping portions 222, 223 are pivotally coupled at respective second ends utilising a ring 225 or loop or the like. A hook element 228 is extending from respective second ends of the first and second clamping portions 222, 223, each one adapted to operably receive the ring 225 or loop. Accordingly, when assembled, the first and second clamping portions 222, 223 are pivotable between a closed position, as shown in Figure 7, and an open position, as shown in Figure 8.

The U-shaped profile of the mounting flange 210 and the securing flange 211 form a spring element. This applies a bias against the screw, in use, to prevent the screw from loosening.

Each one of respective first and second portions 210a,b, 211a,b of the mounting flange 210 and the securing flange 211 have suitable fixing apertures. The fixing apertures of respective first and second portion are coaxial and can be aligned with a respective aperture of the elongate member 202. The fixing apertures and the aperture in the first and second end portions 232a, 232b are sized to receive a fastening element, such as a pin, screw or clip. As shown in Figures 7 and 9, a fastener 1000 is inserted through the fixing apertures in the securing flange 211 and, when closed, through the fixing apertures of the mounting flange 210, as well as, the respective aperture in the first or second end portion 232a, 232b of the elongate member 202. The fastener 1000 secures the clamping elements 201a or 201b to the elongate member 202 and secures the first and second clamping portions when in the closed position.

As mentioned previously, the fastener 1000 may be a pin, screw, clip, or any other fastener suitable for securing the mounting flange 210 and the securing flange 211 together, and for securing the mounting and securing flanges 210, 211 to the elongate member 202. In one example, the fastener 1000 is a threaded screw. The aperture in each of the first and second end portions 232a, 232b is formed by a cylindrical element 227 which has an threaded internal surface for threadingly receiving the threaded screw 1000. The cylindrical element 227 is protruding into the gap between first and second portions 210a,b of the mounting flange 210 forming a contact surface for the elongate member 202. In this example embodiment is arcuate to match the arcuate profile of the elongate member 202. The two mating arcuate surfaces between the cylindrical element 227 and the elongate member 202 provide an improved contact engagement between the elongate member 202 and respective clamping elements 201a,b, allowing the elongate member 202 to tilt relative to the fastener 1000 (i.e. its elongate axis) within a predetermined limited range.

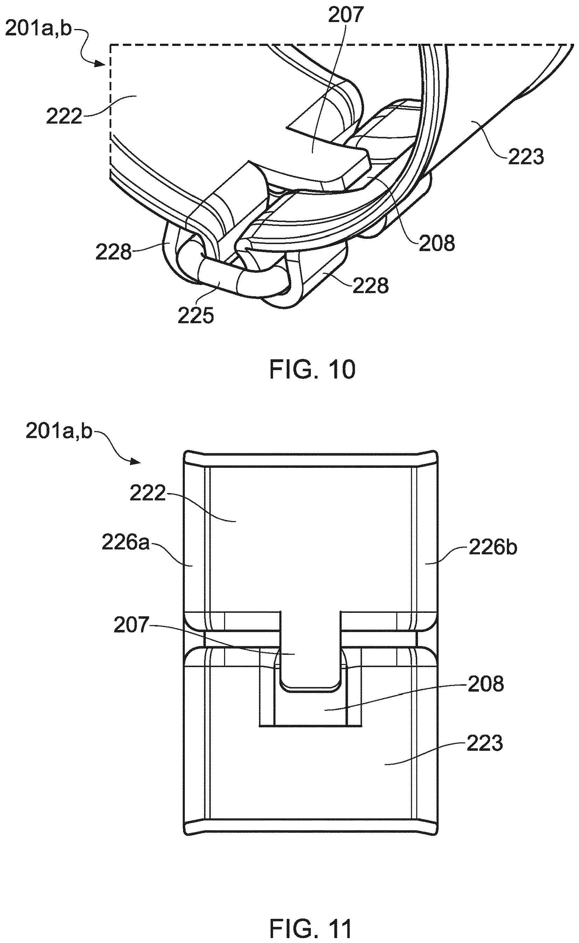

The first ends of each of the first clamping portion 222 and the second clamping portion 223 are circumferentially spaced apart from one another. The first and second ends of the first clamping portion 222 each have an arcuate tongue 207 protruding circumferentially outward in line with the circumference of the assembled clamping element 201a,b, i.e. the arcuate tongue 207 has the same curvature as the first clamping portion 222. The first and second ends of the second clamping portion 223 each comprise a groove 208 sized and shaped to slidingly receive a respective tongue 207 extending from the ends of the first clamping portion 222. As shown in detail in Figure 10, the groove 208 is sized such that the tongue 207 is received within the groove 208, and an inner surface of the tongue 207 is level with the inner surface of the second clamping portion 223, when assembled (matingly engaged). Thus, the mated tongues 207 and grooves provide a continuous contact surface of the first and second clamping elements 222, 223 about the circumference of the inflator. Accordingly, as illustrated in Figure 9, the clamping elements 201a, 201b are adapted to apply an evenly distributed radial clamping force F to the inflator. This also restricts leakage of air between the sleeve and the inflator when the mounting bracket 200 is clamped about both the sleeve and the inflator.

In some examples, the tongues 207 and grooves 208 may be provided on either of the first and second clamping portions 222, 223 in a complimentary arrangement. For example, the first clamping portion 222 may have a tongue 207 at the first end and a groove 208 at the second end, and the second clamping portion 223 may have a groove 208 at the first end and a tongue 207 at the second end, or vice versa.

Further, as shown in Figures 8 and 9, an O-ring 229 may be provided about the fastener 1000 between first and second portions 211a, 211b of the securing flange 211. The O-ring 229 may be formed from an elastomer material. Accordingly, the O-ring 229 holds the fastener 1000 in a pre-assembled position in the securing flange 211. This allows the fastener 1000 to be pre-assembled in the securing flange 211 during transport and assembly. Alternatively, other means of holding the fastener 1000 in the pre-assembled position in the securing flange 211 may be used.

As shown in Figure 9, a gap 'G' is provided between the mounting flange 210 and the securing flange 211 when the clamping elements 201a, 201b are in the closed position. This provides a tolerance to allow for small variations in the diameter of the inflator, or to allow for a sleeve of an airbag cushion to be positioned over the inflator. Furthermore, this gap G permits movement of the first clamping portion 222 relative to the a second clamping portion 223. This movement allows the clamping element 201a, 201b to adapt to the inflator (not shown) as the fastener 1000 is tightened.

According to an example of the present invention, as shown in Figure 11, an inner surface of each of the first and second clamping portions 222, 223 is chamfered at its outer edges 226a, 226b. The chamfered outer edges 226a, 226b are widened radially outwards. The chamfered outer edges 226a, 226b may also be rounded. The chamfered outer edges 226a, 226b prevent or at least minimise potential damage to the sleeve of the airbag cushion when the clamping element 201a or 201b is clamped about the sleeve and the inflator (not shown).

To secure the mounting bracket 200 about the inflator, the clamping elements 201a and 201b are provided in an open position, as shown in Figure 8. The clamping elements 201a and 201b are placed about the inflator and moved to a closed position by moving the first end of each of the clamping portions 222, 223, towards the first end of the other one of the clamping portions 222, 223. Optionally, one or both of the clamping elements 201a, 201b may also be placed about the sleeve of the airbag cushion to secure the sleeve to the inflator. The fastener 1000 is then inserted through apertures in the securing flange 211, the first or second end portion 232a or 232b of the elongate member 202, and the mounting flange 210 to secure each clamping element 201a and 201b in the closed position and to securing each clamping element 201a and 201b to the elongate member 202, as shown in Figures 7 and 9.

Before, or after, securing the mounting bracket 200 to the inflator, the mounting bracket 200 is secured to the component (e.g. vehicle structure). To secure the mounting bracket 200 to the component, a screw is inserted through the mounting aperture 204 of the elongate member 202 and fastened to the component.

In some examples, the first clamping element 101a or 202a and the second clamping element 101b or 202b are fastened around a portion of the inflator (not shown) which is not covered by the sleeve of the airbag cushion. An additional clamp may be used to fasten the sleeve of the airbag cushion (not shown) over an end section of an inflator. The additional clamp may be separate to the mounting bracket 100, 200 or may be a feature of the mounting bracket 100, 200.

In other examples, the first clamping element 101a or 201a is fastened around the sleeve of the airbag cushion which is positioned over an end section of an inflator to secure the sleeve to the inflator and the second fastening element 101b or 201b is fastened around a portion of the inflator which is not covered by the sleeve of the airbag cushion.

In some examples, the clamping elements 101a, 101b or 201a, 201b may be adjustable and can be clamped to inflators having various circumferential diameters. The clamping elements101a, 101b or 201a, 201b will thus be able to apply an even circumferential pressure, irrespective of the circumferential diameter of the inflator received therein.

In some examples, the mounting bracket 100 or 200 may have a third clamping element having the same structure as the first and second clamping elements 101a, 101b or 201a, 201b. The third clamping element may be fastened around the sleeve of the cushion when positioned over the inflator, or fastened around a portion of the inflator which is not covered by the sleeve.

In some examples, the mounting portion 103a, 103b may alternatively be apertures provided in the elongate member 102. The elongate member 102 may have one, two or three apertures. The apertures are sized to receive a screw, clip, or any other suitable fastening means.

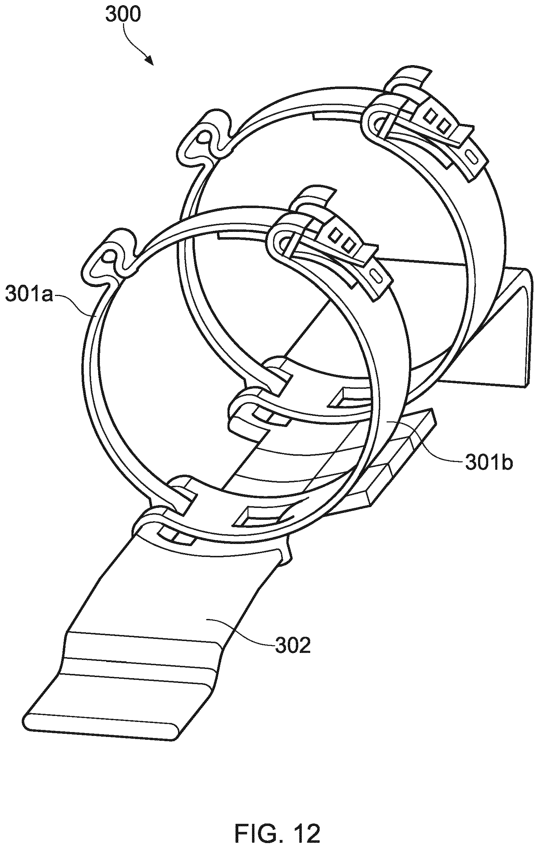

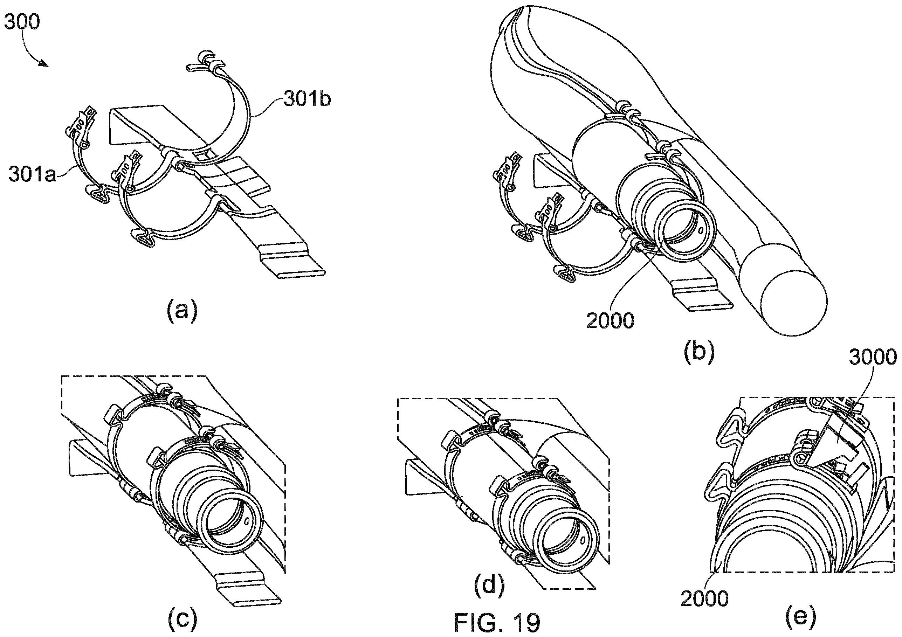

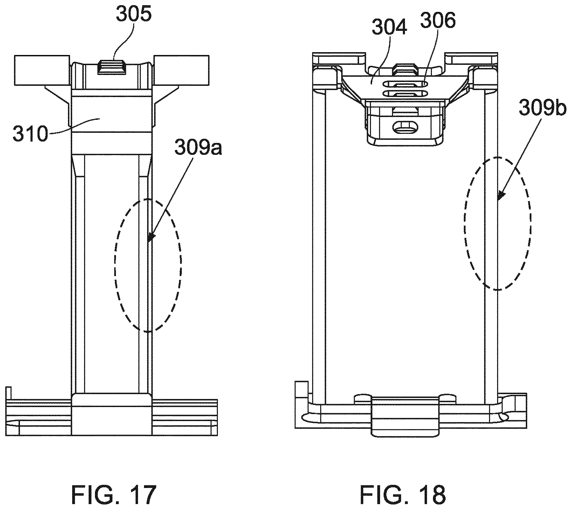

An example embodiment of a mounting bracket 300 according to a third aspect which is not part of the present invention is shown in Figures 12 to 19. As with the other embodiments 100, 200, the mounting bracket 300 includes a first and second clamping element 301a,b that are operably coupled so as to provide a stepless and tightenable clamp fixing. The function and operation of the clamps and fixing is self-explanatory from the schematic figures, such as sequence of Fig.19, and is thus not described in any more detail other than the essential characterising differences. Here, first and second clamping elements 301a,b are pivotably coupled with the elongate member 302 so as to allow at least one of the clamping elements, e.g. 301a, to rotate away from the other clamping element 301b into an open position. The first clamping element 301a comprises a toothed end portion 303 operably engageable with a resilient locking clamp 304, such that the toothed end portion 303 can slide through the resilient locking clamp 304 in a first direction (closing direction) and prevents sliding movement between the toothed end portion 303 and the resilient locking clamp 304 in a second direction (opening direction) when lockingly engaged, i.e. the clamp can be tightened by sliding the toothed end portion 303 through the apertures 306 of the resilient locking clamp 304, but cannot be opened (or loosened) unless the resilient locking clamp 304 is "opened" (i.e. disengaged from the teeth 305 of the toothed end portion 303.

The second clamping element 301b comprises a hooked end portion 307 adapted to retainingly receive the resilient locking clamp 304. A central tongue member 308 is provided at the second clamping element 301b to guidingly engage with the first clamping element 301a. Rounded or chamfered outer edges 309a,b are provided as already described for the first and second aspect of the mounting bracket 100, 200.

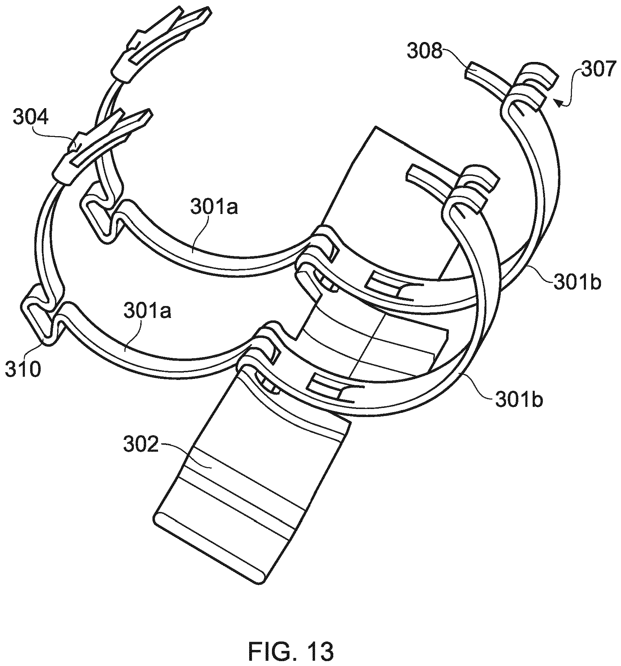

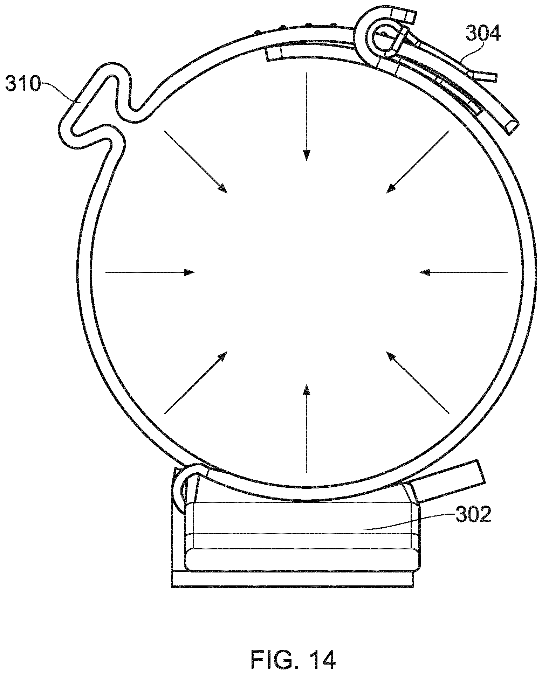

Furthermore, as shown particularly in Figures 13 and 14, a spring portion 310 may be provided on the first clamping element 301a, so as to provide a radial spring bias (biased tension). The spring portion 310 may be a simple loop element incorporated into the first clamping element 301a, or the second clamping element 301b, or both. During use, when tightening the two engaged clamping elements 301a,b, the spring portion 310 will allow some extension (gap is opening) with increasing biasing force.

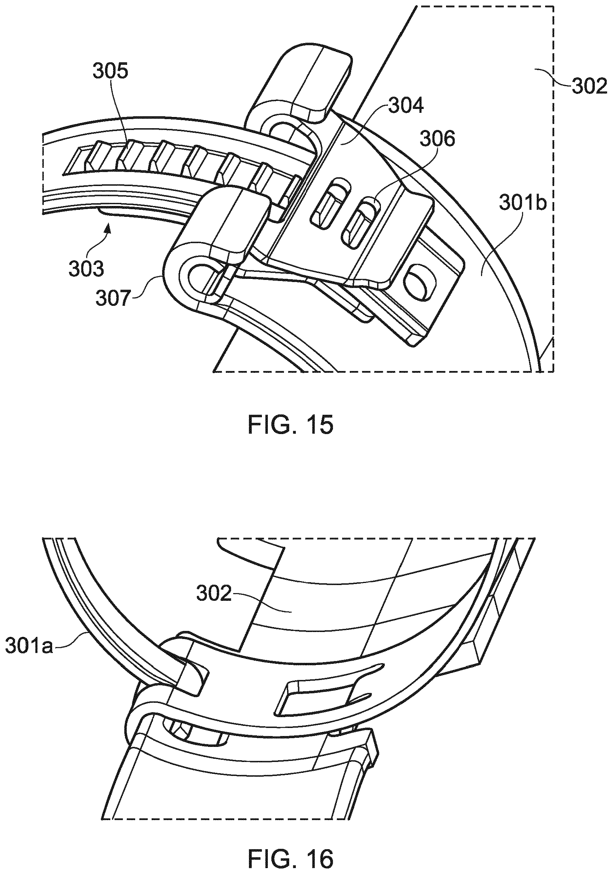

Figure 16 illustrates a detailed view of the clamping element 301a,b end portions lockingly coupled via the locking clamp 304. The stepless pivot joint with the elongate member 302 and the guiding tongue member 308 provide for full 360 degrees of evenly distributed radial forces onto the inflator 2000 when clamped therein.

As illustrated in the sequence of Figures 19 (a) to (e), during assembly, the first and second clamping elements 301a,b are moved into an open position, an inflator 2000 is positioned into the open clamps 301a,b onto the curved elongate member 302 and the clamps 301a,b are locked and tightened around the inflator 2000 via the toothed fixing and locking clamp 304. In order to open the locked clamps 301a,b, a specific tool 3000 may be used to disengage the locking clamp 304 and teeth 305 of the toothed end portion 303.

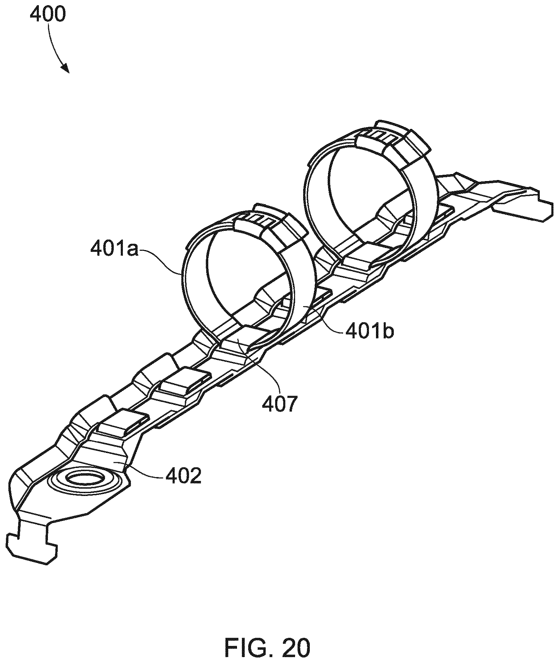

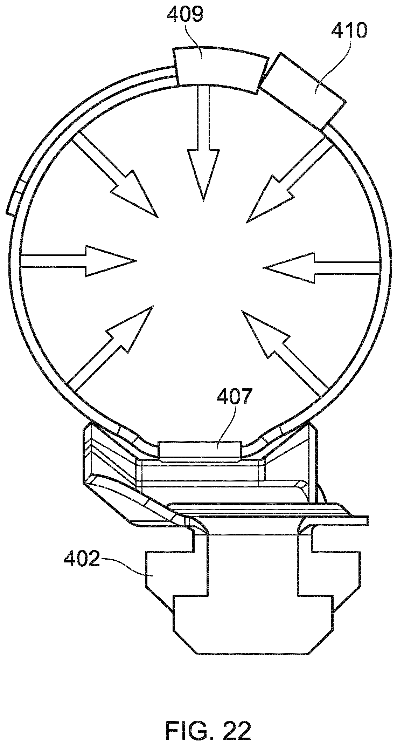

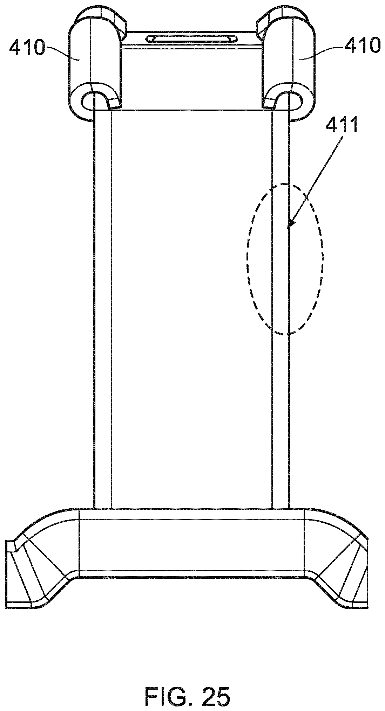

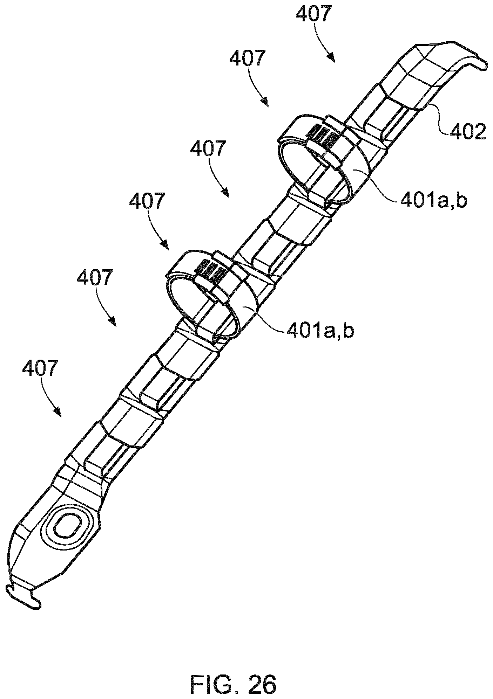

An example embodiment of a mounting bracket 400 according to a fourth aspect which is not part of the present invention is shown in Figures 20 to 26.

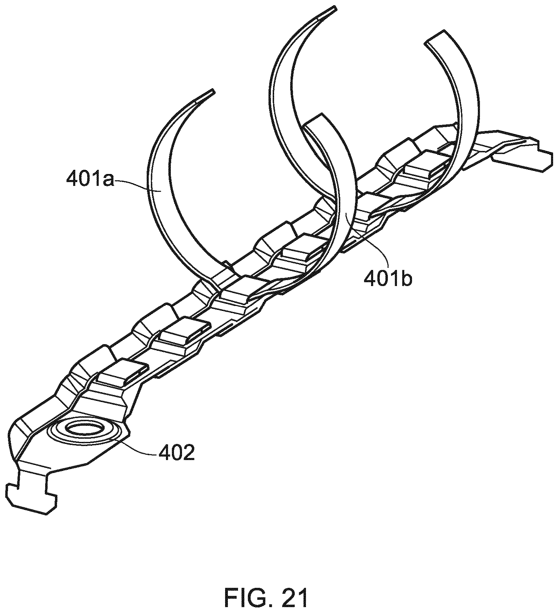

Figure 20 illustrates a perspective view of the mounting bracket 400 in a closed position (without the inflator) and Figure 21 illustrates the mounting bracket 400 in an open position. Again, only the essential characterising features are described in any more detail. Like features (see mounting brackets 100, 200, 300) or function(s) obvious from the attached Figures are only mentioned if required.

The first and second clamping elements 401a,b are provided by a single band looped through a raised slot 407 of the elongate member 402 so as to align perpendicular to the longitudinal axis of the elongate member 402. A plurality of such raised slots 407 are incorporated into a central portion of the elongate member 402 and parallelly arranged along the longitudinal axis of the elongate member 402. Thus, any suitable number of metal bands may be looped through the raised slots 407 in order to form a first and second clamping element 401a,b. Also, the one or more metal bands may be removed from the elongate member 402 and coupled with a different (shape) elongate member comprising the raised slots 407 for engagement with the single bands, thus, providing a modular solution of the mounting bracket 400.

The first clamping element 401a is provided with a toothed end portion 403 and the second clamping element 401b is provided with corresponding apertured end portion 406 comprising a plurality of apertures 408 adapted to lockingly engage with the teeth 405 of the toothed end portion 403, at least when the first and second engaged clamping elements 401a,b move relative to each other in a first direction (i.e. to open). The teeth 405 are configured to allow relative movement of the engaged first and second clamping elements 401a,b in a second direction (i.e. to close).

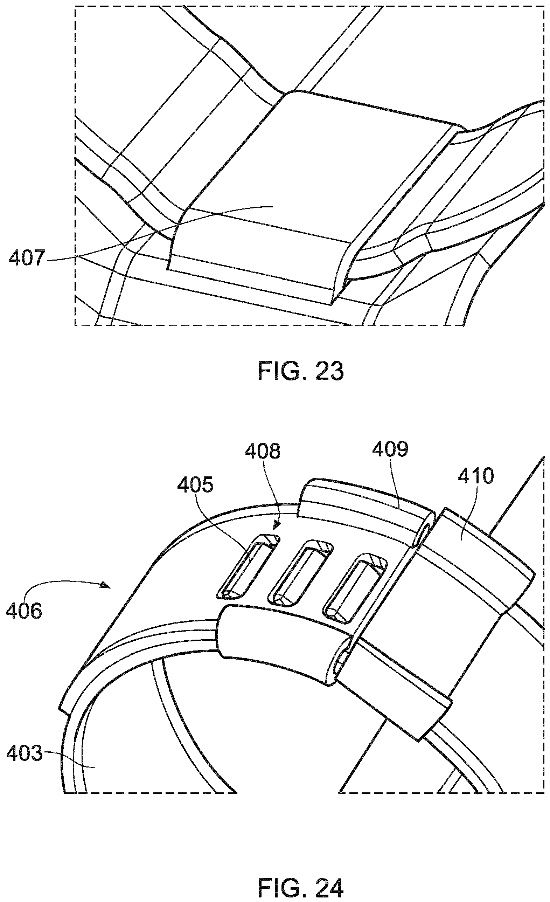

As particularly shown in Figure 24, the toothed end portion 403 further comprises guide members 409 extending laterally away from bending back towards a lateral edge of the toothed end portion 403 so as to form a U-shaped guide for the apertured end portion 406. The apertured end portion comprises a stop member 410 formed at the end of the apertures 408 and adapted to stoppingly engage with the guide members 409. The stop member 410 is formed by two opposing lateral extensions of a lateral edge portion 411 of the second clamping element 401b, each one bent back towards the lateral edge portion so as to form a loop suitable to function as a stopper.

In use, at least one metal band is pulled through one of the raised slots 407 forming first and second clamping elements 401a,b and arranged in an open position. An inflator (not shown) is then positioned onto the elongate element 402 and the apertured end portion 406 is slidingly engaged with the guide members 409 of the toothed end portion 403 such that the teeth 405 lockingly engage with a corresponding aperture 408. The apertured end portion 406 is moved into the close position until the stop member 410 abuts with the guid members 409. The arrangement of the raised slots and slidingly engaging toothed and apertured end portions 403, 406 provides for a stepless clamp with radial forces of the formed 360° loop distributed evenly around the inflator. As with the other example embodiments 100, 200, 300 the edges of the first and second clamping elements 401a,b are rounded or chamfered.

It will be appreciated by persons skilled in the art that the above embodiment(s) have been described by way of example only and not in any limitative sense, and that various alterations and modifications are possible without departing from the scope of the invention as defined by the appended claims. The embodiments described are mounting brackets for a side curtain airbag assembly. It will be appreciated that the mounting brackets described above could be used to secure other airbags.

**Reference list:**

| | | | |
|---|---|---|---|
| 100 | mounting bracket (1st) | 222 | 1st clamping portion |
| 101a,b | 1st, 2nd clamping element | 223 | 2nd clamping portion |
| 102 | elongate member | 225 | ring or loop |
| 103a,b | 1st, 2nd mounting member | 226a,b | outer edges, chamfered |
| 104a,b | mounting aperture | 227 | cylindrical element |
| 105a,b | first end portion | 228 | hook element |
| 106a,b | second end portion | 229 | O-ring |
| 107a,b | first curved protrusion | 232a,b | 1st, 2nd end portion |
| 108a,b | second curved protrusion | 300 | mounting bracket (3rd) |
| 109a,b | third curved protrusion | 301a,b | 1st, 2nd clamping element |
| 110a,b | first mounting flange | 302 | elongate member |
| 111a,b | second mounting flange | 303 | toothed end portion |
| 112a,b | aperture | 304 | resilient locking clamp |
| 113a,b | 1st locking flange | 305 | teeth |
| 114a,b | 2nd locking flange | 306 | aperture |
| 115a,b | 3rd locking flange | 307 | hooked end portion |
| 116a,b | 1st tine or surface | 308 | central tongue member |
| 117a,b | 2nd tine or surface | 309a,b | outer edges, round or chamfered |
| 118a,b | 3rd tine or surface | 310 | spring portion |
| 119a,b | 1st contact surface | 400 | mounting bracket (4th) |
| 120a,b | 2nd contact surface | 401a,b | 1st, 2nd clamping element |
| 122a,b | first adjustable portion | 402 | elongate member |
| 123a,b | second adjustable portion | 403 | toothed end portion |
| 124a,b | open ended sleeve member | 405 | teeth |
| 200 | mounting backet (2nd) | 406 | apertured end portion |
| 201a,b | 1st, 2nd clamping element | 407 | raised slot |
| 202 | elongate member | 408 | apertures |
| 204 | central mounting aperture | 409 | guide members |
| 207 | arcuate tongue | 410 | stop member |
| 208 | groove | 411 | lateral edge portion |
| 210 | mounting flange | 1000 | fastener |
| 210a,b | 1st, 2nd portion of flange | 2000 | inflator |
| 211 | securing flange | 3000 | tool |
| 211a,b | 1st, 2nd portions of flange | | |

## Claims

1. A mounting bracket (100) for mounting an airbag to a component of a vehicle, the airbag having an inflator (2000) and a cushion received over an end of the inflator (2000), the mounting bracket (100) comprising:
a first clamping element (101a);
a second clamping element (101b);
an elongate member (102) coupled between the first clamping element (101a) and the second clamping element (101b); and
one or more mounting portions (103a, 103b) for mounting the mounting bracket (100) to the component, wherein the one or more mounting portions (103a, 103b) are disposed on at least one of the first clamping element (101a), the second clamping element (101b) or the elongate member (102);
wherein the first clamping element (101a) and the second clamping element (101b) are spaced apart along a length of the elongate member (102) such that, in use, the first clamping element (101a) and the second clamping element (101b) are arranged to clamp the inflator (2000); and
wherein each of the first clamping element (101a) and the second clamping element (101b) comprise an open-ended sleeve member (124a, 124b) having a first end portion (105a) and a second end portion (105b) circumferentially spaced apart from the first end portion (105a);
**characterised in that** the first end portion (105a) comprises a first protrusion (107a, 107b) facing the second end portion (105b) and **in that** the second end portion (105b) comprises a second protrusion (108a, 108b) facing the first end portion (105a) and which is offset from the first protrusion (107a, 107b).

2. The mounting bracket (100) according to claim 1, wherein the first protrusion (107a, 107b) and the second protrusion (108a, 108b) are curved protrusions such that the clamp applies an even circumferential pressure during use.

3. The mounting bracket (100) according to claim 1 or claim 2, wherein the first end portion (105a) further comprises a third protrusion (109a, 109b) spaced apart from the first protrusion (107a, 107b) and facing the second end portion (105b), and wherein the second protrusion (108a, 108b) is received in a gap between the first protrusion (107a, 107a) and the third protrusion (109a, 109b), in use.

4. The mounting bracket (100) according to any of claims 1 to 3, wherein each mounting portion (103a, 103b) comprises a first mounting flange (110a, 110b) extending from first end portion (105a) and a second mounting flange (111a, 111b) extending from the second end portion (105b) of each of the clamping elements (101a, 101b), and wherein the first (110a, 110b) and second (111a, 111b) mounting flanges each comprise an aperture (112a, 112b) configured to receive a fastening element therethrough.

5. The mounting bracket (100) according to any of claims 1 to 4, wherein the second end portion (105b) is moveable towards the first end portion (105a) to a fastened position so as to reduce the circumference of the open-ended sleeve member, and wherein the second end portion (105b) is configured to be secured relative to the first end portion (105a) in the fastened position.

6. The mounting bracket (100) according to any preceding claim, wherein the first clamping element (101a), the second clamping element (101b), and the elongate member (102) are integrally formed.

7. The mounting bracket (100) according to any preceding claim, wherein, in use, the first clamping element (101a) is arranged to clamp the cushion and the inflator (2000).

8. The mounting bracket (100) according to any preceding claim, wherein outer edges of an inner surface of the first clamping element (101a) and/or the second clamping element (101b) are chamfered and are widened radially outwards, and wherein the first clamping element (101a) and/or the second clamping element (101b) is arranged to contact the inflator (2000) about the entire circumference of the inflator (2000) to provide a continuous radial clamping force to the inflator (2000).

## Patentansprüche

1. Montagehalterung (100) zum Befestigen eines Airbags an einer Komponente eines Fahrzeugs, wobei der Airbag einen Gasgenerator (2000) und ein Kissen aufweist, das über einem Ende des Gasgenerators (2000) aufgenommen ist, die Montagehalterung (100) aufweisend:
ein erstes Klemmelement (101a);
ein zweites Klemmelement (101b);
ein längliches Elemento(102), das zwischen dem ersten Klemmelement∘(101a) und dem zweiten Klemmelemento(101b) gekoppelt ist; und
einen oder mehrere Befestigungsabschnitte (103a, 103b) zum Befestigen der Montagehalterung (100) an der Komponente, wobei der eine oder die mehreren Befestigungsabschnitte (103a, 103b) an zumindest einem aus dem ersten Klemmelement (101a), dem zweiten Klemmelement (101b) oder dem länglichen Element (102) angeordnet sind;
wobei das erste Klemmelement∘(101a) und das zweite Klemmelement∘(101b) derart entlang einer Länge des länglichen Elements∘(102) beabstandet sind, dass das erste Klemmelement∘(101a) und das zweite Klemmelement∘(101b) im Gebrauch so angeordnet sind, dass sie den Gasgenerator (2000) festklemmen; und
wobei das erste Klemmelement∘(101a) und das zweite Klemmelement∘(101b) jeweils ein Hülsenelement mit offenem Endeo(124a, 124b) mit einem ersten Endabschnitt (105a) und einem zweiten Endabschnitt∘(105b) aufweisen, die in Umfangsrichtung von dem ersten Endabschnitt∘(105a) beabstandet sind;
**dadurch gekennzeichnet, dass** der erste Endabschnitt∘(105a) einen ersten Vorsprung∘(107a, 107b) aufweist, der dem zweiten Endabschnitt∘(105b) zugewandt ist, und dass der zweite Endabschnitt (105b) einen zweiten Vorsprung∘(108a, 108b) aufweist, der dem ersten Endabschnitt∘(105a) zugewandt ist und von dem ersten Vorsprung∘(107a, 107b) versetzt ist.

2. Montagehalterungo(100) nach Anspruch∘1, wobei der erste Vorsprung∘(107a, 107b) und der zweite Vorsprung∘(108a, 108b) gekrümmte Vorsprünge sind, sodass die Klemme im Gebrauch einen gleichmäßigen Umfangsdruck ausübt.

3. Montagehalterungo(100) nach Anspruch∘1 oder Anspruch∘2, wobei der erste Endabschnitt (105a) ferner einen dritten Vorsprung∘(109a, 109b) aufweist, der von dem ersten Vorsprung∘(107a, 107b) beabstandet ist und dem zweiten Endabschnitt∘(105b) zugewandt ist, und wobei der zweite Vorsprung∘(108a, 108b) im Gebrauch in einem Spalt zwischen dem ersten Vorsprung∘(107a, 107a) und dem dritten Vorsprung∘(109a, 109b) aufgenommen ist.

4. Montagehalterung∘(100) nach einem der Ansprüche∘1 bis 3, wobei jeder Befestigungsabschnitt∘(103a, 103b) einen ersten Befestigungsflansch∘(110a, 110b), der sich von dem ersten Endabschnitt∘(105a) erstreckt, und einen zweiten Befestigungsflansch∘(111a, 111b), der sich von dem zweiten Endabschnitt∘(105b) jedes der Klemmelementeo (101a, 101b) erstreckt, aufweist, und wobei die ersten∘(110a, 110b) und zweiten∘(111a, 111b) Befestigungsflansche jeweils eine Öffnung (112a, 112b) aufweisen, die ausgebildet ist, um ein Befestigungselement durch diese hindurch aufzunehmen.

5. Montagehalterung∘(100) nach einem der Ansprüche∘1 bis 4, wobei der zweite Endabschnitt∘(105b) in Richtung des ersten Endabschnitts∘(105a) in eine befestigte Position bewegt werden kann, um den Umfang des Hülsenelements mit offenem Ende zu verringern, und wobei der zweite Endabschnitt∘(105b) ausgebildet ist, um relativ zum ersten Endabschnitt∘(105a) in der befestigten Position gesichert zu werden.

6. Montagehalterungo(100) nach einem der vorhergehenden Ansprüche, wobei das erste Klemmelement∘(101a), das zweite Klemmelemento(101b) und das längliche Elemento(102) einstückig ausgebildet sind.

7. Montagehalterungo(100) nach einem der vorhergehenden Ansprüche, wobei das erste Klemmelemento(101a) im Gebrauch so angeordnet ist, dass es das Kissen und den Gasgenerator (2000) festklemmt.

8. Montagehalterungo(100) nach einem der vorhergehenden Ansprüche, wobei die Außenkanten einer Innenfläche des ersten Klemmelements∘(101a) und/oder des zweiten Klemmelements∘(101b) abgeschrägt und radial nach außen erweitert sind, und wobei das erste Klemmelemento(101a) und/oder das zweite Klemmelement∘(101b) so angeordnet sind, dass sie den Gasgenerator∘(2000) um den gesamten Umfang des Gasgenerators (2000) herum berühren, um dem Gasgenerator (2000) eine kontinuierliche radiale Klemmkraft bereitzustellen.

## Revendications

1. Ferrure de montage (100) pour monter un sac gonflable sur un composant d'un véhicule, le sac gonflable ayant un gonfleur (2000) et un coussin reçu sur une extrémité du gonfleur (2000), la ferrure de montage (100) comprenant :
un premier élément de serrage (101a) ;
un deuxième élément de serrage (101b) ;
un organe allongé (102) couplé entre le premier élément de serrage (101a) et le deuxième élément de serrage (101b) ; et
une ou plusieurs portions de montage (103a, 103b) pour le montage de la ferrure de montage (100) sur le composant, dans laquelle les une ou plusieurs portions de montage (103a, 103b) sont disposées sur au moins l'un parmi le premier élément de serrage (101a), le deuxième élément de serrage (101b) ou l'organe allongé (102) ;
dans laquelle le premier élément de serrage (101a) et le deuxième élément de serrage (101b) sont espacés le long d'une longueur de l'organe allongé (102) de sorte que, en utilisation, le premier élément de serrage (101a) et le deuxième élément de serrage (101b) sont agencés pour serrer le gonfleur (2000) ; et
dans laquelle le premier élément de serrage (101a) et le deuxième élément de serrage (101b) comprennent un organe de manchon à extrémité ouverte (124a, 124b) ayant une première portion d'extrémité (105a) et une deuxième portion d'extrémité (105b) espacée circonférentiellement de la première portion d'extrémité (105a) ;
**caractérisée en ce que** la première portion d'extrémité (105a) comprend une première saillie (107a, 107b) faisant face à la deuxième portion d'extrémité (105b) et **en ce que** la deuxième portion d'extrémité (105b) comprend une deuxième saillie (108a, 108b) faisant face à la première portion d'extrémité (105a) et qui est décalée par rapport à la première saillie (107a, 107b).

2. Ferrure de montage (100) selon la revendication 1, dans laquelle la première saillie (107a, 107b) et la deuxième saillie (108a, 108b) sont des saillies incurvées de telle sorte que la pince applique une pression circonférentielle uniforme pendant l'utilisation.

3. Ferrure de montage (100) selon la revendication 1 ou la revendication 2, dans laquelle la première portion d'extrémité (105a) comprend en outre une troisième saillie (109a, 109b) espacée de la première saillie (107a, 107b) et faisant face à la deuxième portion d'extrémité (105b), et dans laquelle la deuxième saillie (108a, 108b) est reçue dans un espace entre la première saillie (107a, 107a) et la troisième saillie (109a, 109b), pendant l'utilisation.

4. Ferrure de montage (100) selon l'une quelconque des revendications 1 à 3, dans laquelle chaque portion de montage (103a, 103b) comprend une première bride de montage (110a, 110b) s'étendant à partir de la première portion d'extrémité (105a) et une deuxième bride de montage (111a, 111b) s'étendant à partir de la deuxième portion d'extrémité (105b) de chacun des éléments de serrage (101a, 101b), et dans laquelle les première (110a, 110b) et deuxième (111a, 111b) brides de montage comprennent chacune une ouverture (112a, 112b) configurée pour recevoir un élément de fixation à travers celle-ci.

5. Ferrure de montage (100) selon l'une quelconque des revendications 1 à 4, dans laquelle la deuxième portion d'extrémité (105b) est mobile vers la première portion d'extrémité (105a) vers une position fixée de manière à réduire la circonférence de l'organe de manchon à extrémité ouverte, et dans laquelle la deuxième portion d'extrémité (105b) est configurée pour être arrimée par rapport à la première portion d'extrémité (105a) dans la position fixée.

6. Ferrure de montage (100) selon l'une quelconque des revendications précédentes, dans laquelle le premier élément de serrage (101a), le deuxième élément de serrage (101b) et l'organe allongé (102) sont formés d'un seul tenant.

7. Ferrure de montage (100) selon l'une quelconque des revendications précédentes, dans laquelle, en utilisation, le premier élément de serrage (101a) est agencé pour serrer le coussin et le gonfleur (2000).

8. Ferrure de montage (100) selon l'une quelconque des revendications précédentes, dans laquelle les bords extérieurs d'une surface intérieure du premier élément de serrage (101a) et/ou du deuxième élément de serrage (101b) sont chanfreinés et sont élargis radialement vers l'extérieur, et dans laquelle le premier élément de serrage (101a) et/ou le deuxième élément de serrage (101b) sont agencés pour entrer en contact avec le gonfleur (2000) autour de la totalité de la circonférence du gonfleur (2000) afin de fournir une force de serrage radiale continue au gonfleur (2000).
